(19) Europäisches Patentamt
European Patent Office
Office européen des brevets

(11) Veröffentlichungsnummer: **0 321 851**
**A1**

# (12) EUROPÄISCHE PATENTANMELDUNG

(21) Anmeldenummer: **88120950.6**

(51) Int. Cl.⁴: **C08F 10/02 , C08F 4/64**

(22) Anmeldetag: **15.12.88**

Patentansprüche für folgenden Vertragsstaat: ES.

(30) Priorität: **21.12.87 DE 3743322**

(43) Veröffentlichungstag der Anmeldung:
**28.06.89 Patentblatt 89/26**

(84) Benannte Vertragsstaaten:
**BE DE ES FR GB IT NL**

(71) Anmelder: **HOECHST AKTIENGESELLSCHAFT**
**Postfach 80 03 20**
**D-6230 Frankfurt am Main 80(DE)**

(72) Erfinder: **Lüker, Hartmut, Dr.**
**Königsteiner Strasse 13**
**D-6238 Hofheim am Taunus(DE)**

## (54) Polyethylenwachs und Verfahren zu seiner Herstellung.

(57) Polyethylenwachse mit sehr enger Molmassenverteilung, hoher Isotaktizität, enger Korngrößenverteilung und hoher Schüttdichte erhält man mittels eines Katalysators, welcher aus einem Metallocen und einem Aluminoxan besteht, in Gegenwart von geringen Mengen Wasserstoff bei der Polymerisation.

EP 0 321 851 A1

## Polyethylenwachs und Verfahren zu seiner Herstellung

Die vorliegende Erfindung bezieht sich auf Polyethylenwachse mit sehr enger Molmassenverteilung, sehr engem Schmelzbereich und hoher Schüttdichte, sowie ein Verfahren zu ihrer Herstellung.

Polyethylenwachse haben Bedeutung für eine Vielzahl von Anwendungsgebieten. Insbesondere hochkristalline Wachse finden steigendes Interesse, als Beimischung für abriebfeste Druckfarben, Lackmattierung und zur Herstellung von emulgierbaren Wachsen für Putzmittel.

Es ist ein Verfahren zur Herstellung von Polyethylenwachs bekannt, welches mit hoher Ausbeute arbeitet (vgl. EP-A 21 700). Dennoch sind unverhältnismäßig große Mengen Wasserstoff notwendig, um die gewünschte niedrige Molmasse zu erreichen. Außerdem wird ein Teil des eingesetzten Ethylens in Ethan umgewandelt, so daß Monomerverluste entstehen.

Außerdem ist ein Verfahren zur Herstellung von Oligomeren mit einem Katalysator aus Aluminoxan und $MgCl_2 \cdot H_2O$ und $cp_2ZrClH$ beschrieben worden, wobei aber keine kristallinen Wachse mit hoher Schüttdichte erzeugt, sondern Oligomere mit Ethylen und 4-Methylenpenten (vgl. JP 62/129303).

Im übrigen haben die bekannten Katalysatoren für die Herstellung von Polyethylenwachsen den Nachteil, daß das Comonomere wenig statistisch, sondern überwiegend in den hochmolekularen oder niedermolekularen Anteil eingebaut wird.

Somit bestand die Aufgabe darin, ein Verfahren zu finden, welches hochkristalline Polyethylenwachse in hoher Ausbeute und Wirtschaftlichkeit liefert.

Es wurde gefunden, daß die Aufgabe gelöst werden kann, wenn man Ethylen mittels eines Metallocen/Aluminoxan-Katalysators in Gegenwart kleiner Mengen Wasserstoff polymerisiert.

Die Erfindung betrifft somit ein Polyethylenwachs, bestehend aus oder enthaltend Einheiten, welche sich vom Ethylen ableiten, mit einer Molmasse von ca. 2000 bis ca. 10000, einer Molmassenverteilung $M_w/M_n$ von ca. 2 bis 10, einer Viskositätszahl von 10 bis 60 $cm^3/g$, einem Schmelzbereich von ca. 129 bis 131 °C für ein Homopolymerisat und ca. 120 bis 126 °C für ein Copolymerisat und einer Dichte von 0,930 bis 0,970 $g/cm^3$ und einer Schüttdichte von 200 bis 400 $g/cm^3$.

Die Erfindung betrifft weiterhin ein Verfahren zur Herstellung eines Polyethylenwachses durch Polymerisation von Ethylen oder Copolymerisation von Ethylen mit einem 1-Olefin der Formel $R\text{-}CH=CH_2$, in der R einen geradkettigen oder verzweigten Alkylrest mit 1 bis 12 C-Atomen bedeutet, bei einer Temperatur von 20 bis 100 °C, einem Druck von 0,5 bis 64 bar, in Lösung, in Suspension oder in der Gasphase, in Gegenwart eines Katalysators, welcher aus einem Metallocen als Übergangsmetallkomponente und einem Aluminoxan als Aktivator besteht, dadurch gekennzeichnet, daß die Polymerisation in Gegenwart eines Katalysators durchgeführt wird, dessen Übergangsmetallkcomponente ein unsubstituierter oder substituierter Cyclopentadienylkomplex des Titans, Zirkons oder Hafniums ist, daß das Aluminoxan ein solches der Formel I

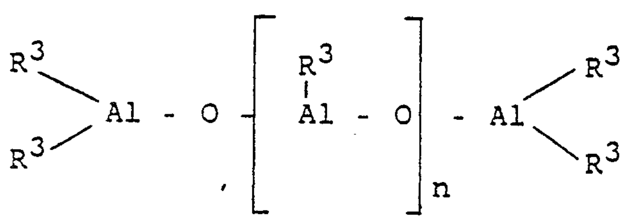

(I)

für den linearen Typ und/oder der Formel II

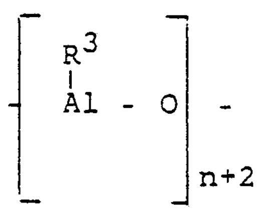

(II)

für den cyclischen Typ ist, wobei in den Formeln I und II $R^3$ eine $C_1$-$C_6$-Alkylgruppe bedeutet und n eine

ganze Zahl von 2 bis 40 ist, und daß Wasserstoff in einer Menge von 0,1 bis 10 Vol-%, bezogen auf Ethylen, zugegen ist.

Das erfindungsgemäße Polyethylenwachs wird hergestellt durch Polymerisation von Ethylen oder Copolymerisation von Ethylen mit 1-Olefinen in Gegenwart eines Katalysators, bestehend aus einem Metallocen als Übergangsmetallkomponente und einem Aluminoxan als Aktivator.

Das Metallocen ist ein unsubstituierter oder substituierter Cyclopentadienylkomplex des Titans, Zirkons oder Hafniums, vorzugsweise des Zirkons oder Hafniums.

Ein geeignetes Metallocen entspricht der Formel

$(Cyclopentadienyl)_2$ M R Hal,

worin R ein Cyclopentadienylrest, einen $C_1$-$C_6$-Alkylrest oder ein Halogenatom, vorzugsweise ein Chloratom, bedeuten, M Titan, Zirkon oder Hafnium, vorzugsweise Zirkon, ist und Hal für ein Halogenatom, vorzugsweise Chloratom, steht.

Weitere geeignete Metallocenverbindungen sind Komplexe $[MX_2(\eta\text{-}C_5H_4R^1)_2]$:

| $R^1$ = | X = | M = | $R^1$ = | X = | M = |
|---|---|---|---|---|---|
| H | F | Zr | H | Br | Zr |
| H | F | Hf | H | Br | Hf |
| H | Cl | Zr | H | J | Zr |
| H | Cl | Hf | H | J | Hf |
| i-$C_3H_7$ | Cl | Zr | $SiMe_3$ *) | Cl | Zr |
| i-$C_3H_7$ | Cl | Hf | $SiMe_3$ | Br | Zr |
| i-$C_4H_7$ | Cl | Zr | $SiMe_3$ | Cl | Hf |
| i-$C_4H_9$ | Cl | Hf | $SiMe_3$ | Br | Hf |
| $GeMe_3$ | Cl | Zr | i-$C_3H_7$ | J | Hf |
| $GeMe_3$ | Cl | Hf | t-$C_4H_9$ | J | Hf |
| $SiMe_3CH_2$-$P(C_6H_5)_2$ | Cl | Zr | $C(CH_2)C_6H_5$ | Cl | Hf |

*) Me = $CH_3$

| $R^1$ = | X = | M = | $R^1$ = | X = | M = |
|---|---|---|---|---|---|
| Menthyl | Cl | Zr | $C(CH_2)C_6H_5$ | Cl | Hf |
| Neomenthyl | Cl | Zr | $(CH_2)_2P$-$(C_6H_5)_2$ | Cl | Zr |
| I-$C_3H_7$ | Br | Hf | | | |
| t-$C_4H_9$ | Br | Hf | | | |
| $[ZrCl_2(\eta\text{-}C_5Me_5)\,(\eta\text{-}C_5H_5)]$ | | | | | |
| $[ZrCl_2(\eta\text{-}C_5Me_5)\,(\eta\text{-}C_5H_2\text{-}1,2,4\text{-}Me_3)]$ | | | | | |

Komplexe $[MCl_2(\eta\text{-}C_5Me_4R^1)_2]$:

| $R^1$ = | M = | $R^1$ = | M = |
|---|---|---|---|
| $CH_3$ | Zr | n-$C_3H_7$ | Zr |
| $C_2H_5$ | Zr | n-$C_4H_9$ | Zr |
| $[MCl_2(\eta\text{-}C_5H_3(SiMe_3)_2)_2]$ mit M = Zr, Hf | | | |
| $[ZrX_2(\eta\text{-}C_5H_3(SiMe_3)_2)_2]$ mit X = Br, F, J | | | |
| $[MCl_2(\eta\text{-}C_5H_4CH_2)_2CH_2)]$ mit M = Zr, Hf | | | |

Komplexe $[MCl_2(\eta\text{-}C_5H_5)(\eta\text{-}C_5H_4R^1)]$:

| $R^1$ = | M = | $R^1$ = | M = |
|---|---|---|---|
| $i\text{-}C_3H_7$ | Zr | $SiMe_2CH_2P(C_6H_5)_2$ | Zr |
| $i\text{-}C_3H_7$ | Hf | $SiMeCH_2P(C_6H_5)_2 \cdot Fe(CO)_4$ | Zr |
| $CH_2C_6H_5$ | Zr | $C(CH_2)C_6H_5$ | Zr |
| $CHMeC_6H_5$ | Zr | $C(CH_2)C_6H_5$ | Hf |
| $CMe_2C_6H_5$ | Zr | | |
| $CMe_2C_6H_5$ | Hf | | |
| $t\text{-}C_4H_9$ | Zr | | |

Komplexe $[MXR^2(\eta\text{-}C_5H_4R^1)2]$:

| $R^1$ = | X = | $R^2$ = | M = |
|---|---|---|---|
| H | Br | OH | Zr |
| H | H | OH | Zr |
| H | Cl | $OC_2\text{-}H_5$ | Zr |
| H | Cl | $O\text{-}i\text{-}C_3H_7$ | Zr |
| H | Cl | O-Menthyl(-) | Zr |
| H | Br | $O\text{-}C_2H_5$ | Zr |
| H | Cl | $SiMe_3$ | Zr |
| H | Cl | $Si(C_6H_5)_3$ | Zr |
| H | Cl | $Si(C_6H_5)_3$ | Hf |
| H | $SiMe_3$ | $SiMe_3$ | Zr |

Bevorzugt verwendet werden Bis(cyclopentadienyl)zirkoniumdimethyl und Bis(cyclopentadienyl)-zirkoniumdichlorid.

Die zweite Komponente des erfindungsgemäß zu verwendenden Katalysators ist ein Aluminoxan der Formel (I)

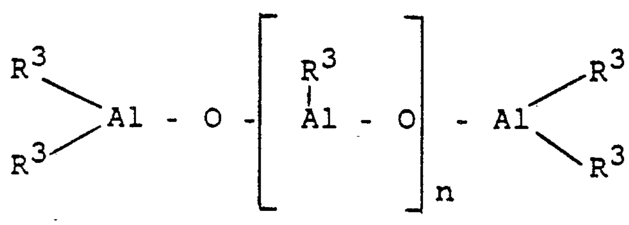

(I)

für den linearen Typ und/oder der Formel II

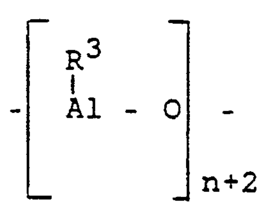

(II)

für den cyclischen Typ. In diesen Formeln bedeuten $R^3$ eine $C_1$-$C_6$-Alkylgruppe, vorzugsweise Methyl, Ethyl oder Isobutyl, insbesondere Methyl, und n eine ganze Zahl von 4 bis 20, bevorzugt 10 bis 20.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und das Toluol unter Vakuum abdestilliert. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -10 bis 100 °C in einem inerten aliphatischen oder aromatischen Lösemittel, vorzugsweise Heptan oder Toluol, gelöstes Aluminiumtrialkyl, vorzugsweise Aluminiumtrimethyl mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 18 bzw. 16 mol $H_2O$/mol $Al_2(SO_4)_3$.

Nachstehend ein Beispiel zur Herstellung von Methylaluminoxan:

37,1 g $Al_2(SO_4)_3 \cdot 18\ H_2O$ (0,056 mol, entsprechend 1 mol $H_2O$) wurden in 250 $cm^3$ Toluol suspendiert, mit 50 $cm^3$ Trimethylaluminium (0,52 mol) versetzt und bei 20 °C zur Reaktion gebracht. Nach 30 Stunden Reaktionszeit sind ca. 1 Mol Methan entwickelt worden. Anschließend wurde die Lösung vom festen Aluminiumsulfat abfiltriert. Durch Abziehen des Toluols wurden 19,7 g Methylaluminoxan erhalten. Die Ausbeute betrug 63 % d. Th. Die kryoskopisch in Benzol bestimmte mittlere Molmasse lag bei 1170. Die Anzahl der ( A l-O)-Einheiten
           |
           R
errechnete sich zu 20,2.

Der mittlere Oligomerisationsgrad betrug aber ca. 20.

Schließlich ist es auch noch möglich, daß Aluminoxan direkt im Polymerisationskessel zu erzeugen, indem vor der Zugabe des Metallocens ein Aluminiumtrialkyl, vorzugsweise Aluminiumtrimethyl, mit Wasser im Verhältnis 1:1 mol/mol umgesetzt wird.

Der erfindungsgemäß zu verwendende Katalysator wird zur Polymerisation von Ethylen und zur Copolymerisation von Ethylen mit 1-Olefinen der Formel $R\text{-}CH=CH_2$, in der R einen geradkettigen oder verzweigten Alkylrest mit 1 bis 12 C-Atomen, vorzugsweise 1 bis 6 C-Atomen, eingesetzt, beispielsweise Propylen, Buten(1), Hexen-(1), 4-Methylpenten-(1), Octen-(1). Besonders bevorzugte 1-Olefine sind 1-Buten, 1-Hexen und 4-Methyl-penten-1. Der Anteil des Ethylens beträgt 90 bis 99, der Anteil des Comonomers 1 bis 10 Mol-%.

Die Polymerisation wird in bekannter Weise in Suspension oder in der Gasphase, kontinuierlich oder diskontinuierlich, ein- oder mehrstufig bei einer Temperatur von 20 bis 100 °C, vorzugsweise 70 bis 90 °C, durchgeführt. Der Druck beträgt 0,5 bis 64 bar. Bevorzugt ist die Polymerisation in dem technisch besonders interessanten Druckbereich von 5 bis 64 bar.

Dabei wird die Übergangsmetallkomponente in einer Konzentration, bezogen auf das Übergangsmetall, von $10^{-5}$ bis $10^{-7}$, vorzugsweise $10^{-5}$ bis $10^{-6}$ mol Ti, Zr oder Hf pro $dm^3$ Lösemittel bzw. pro $dm^3$ Reaktorvolumen angewendet. Das Aluminoxan wird in einer Konzentration von $2 \cdot 10^{-3}$ bis 5 $10^{-3}$, vorzugsweise $2 \cdot 10^{-3}$ bis $3 \cdot 10^{-3}$ mol pro $dm^3$ Lösemittel bzw. pro $dm^3$ Reaktorvolumen verwendet, bezogen auf den Gehalt an Aluminium. Prinzipiell sind aber auch höhere Konzentrationen möglich.

Die Polymerisation wird in der Gasphase oder in einem für das Ziegler-Niederdruckverfahren gebräuchlichen inerten Lösemittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol.

Überraschenderweise hat sich gezeigt, daß der erfindungsgemäß zu verwendende Katalysator sehr empfindlich auf Wasserstoff reagiert und daß Wasserstoff nicht die Ausbeute verringert, sondern im Gegenteil erhöht. Die Molmasse des Polyethylenwachses wird deswegen mittels Wasserstoff geregelt, welcher in der geringen Menge von 1 bis 20, vorzugsweise 1 bis 10 Vol-%, bezogen auf Ethylen, in das Polymerisationsgefäß eingeführt wird.

Das erfindungsgemäße Polyethylenwachs fällt in Form runder Körner mit einem hohen Schüttgewicht

von ca. 200 bis 400 g/dm³ an, es wird ggf. vom Lösemittel abgetrennt und getrocknet.

Das Polyethylenwachs besitzt eine Molmasse von ca. 2000 bis ca. 10000, vorzugsweise ca. 3000 bis ca. 6000. Die Molmassenverteilung $M_w/M_n$ ist außerordentlich eng und beträgt ca. 2 bis 10, wobei bei Verwendung eines Aluminoxans, welches nach der Aluminiumsulfat-Methode gewonnen wurde, der Wert bei ca. 2 bis 5 liegt. Bei Verwendung eines Aluminoxans, welches in situ aus Trialkylaluminium und Wasser erzeugt wurde, ist $M_w/M_n$ ca. 5 bis 10. Die Viskositätszahl des Wachses liegt im Bereich von 20 bis 60 $cm^3/g$. Infolge der hohen Kristallinität und der engen Molmassenverteilung ist der Schmelzbereich des Wachses ebenfalls sehr eng, er beträgt ca. 129 bis 131 °C für ein Homopolymerisat und ca. 120 bis 126 °C für ein Copolymerisat. Das Wachs hat eine Dichte von ca. 0,93 bis ca. 0,97, vorzugsweise 0,940 bis 0,960 $g/cm^3$, und die Schüttdichte ist im allgemeinen größer als 250 $g/dm^3$.

Das erfindungsgemäße Verfahren gestattet es, wegen der extremen Wasserstoffsensibilität des verwendeten Katalysators, Wachse bei relativ niedrigen Prozeßtemperaturen und sehr niedrigem Wasserstoffpartialdruck zu erzeugen. Bei der Copolymerisation wird das Comonomere statistisch einheitlich in die Hauptkette eingebaut. Die Einbaurate ist hoch, so daß nur soviel Comonomer angeboten werden muß, wie auch tatsächlich copolymerisiert wird, was wirtschaftliche Vorteile hat.

Das erfindungsgemäße Polyethlenwachs besitzt wegen seiner engen Molmassenverteilung eine höhere Härte als bekannte Polyethylenwachse und eignet sich daher besonders gut für die Erhöhung der Abrieb- und Scheuerfestigkeit von Druckfarben und zur Verbesserung der Oberflächenqualität von Lackierungen.

**Beispiel 1**

In einen Kessel von 150 $dm^3$ Volumen wurden 100 $dm^3$ Dieselöl vorgelegt und auf 85 °C temperiert. $1 \cdot 10^{-3}$ mol Bis(cyclopentadienyl)-zirkoniumdichlorid und 1,043 mol Methylaluminoxan aus Al-Sulfat-Verfahren wurden unter Rühren vorgelegt. Anschließend wurden über 30 min 150 $Ndm^3$ Wasserstoff eingeführt und Ethylen auf einen Enddruck von 7 bar ergänzt. Die Reaktionsdauer betrug 4 Stunden.

| | |
|---|---|
| Ausbeute: | 11 kg |
| Katalysatorausbeute (KA): | 11 kg/mmol Zr |
| Schüttdichte: | 330 $g/dm^3$ |
| Viskositätszahl: | 32 $cm^3/g$ |
| $M_w/M_n$: | 3,8 |
| Schmelzpunkt (DSC): | 129-131 °C. |

**Beispiel 2**

In Abänderung von Beispiel 1 wurden nur 0,345 mol Methylaluminoxan verwendet und 200 $Ndm^3$ Wasserstoff über 40 min eingeführt.

| | |
|---|---|
| Ausbeute: | 16,4 kg |
| KA: | 16,4 kg/mmol Zr |
| Schüttdichte: | 250 $g/dm^3$ |
| Viskosistätszahl: | 25 $cm^3/g$ |
| $M_w/M_n$: | 4 |
| Schmelzpunkt (DSC): | 129-131 °C |

**Beispiel 3**

Es wurden bei 85 °C 100 $dm^3$ Dieselöl vorgelegt. Unter Rühren wurden 1,043 mol Trimethylaluminium mit 1 mol $H_2O$ zur Reaktion gebracht. Diese Vorreaktion dauerte 15 min. Anschließend wurden 1 mmol Bis-(cyclopentadienyl)zirkoniumdichlorid eindosiert und über 40 min 200 $Ndm^3$ $H_2$ eingeschleust. Danach wurde auf einen Enddruck von 7 bar mit Ethylen ergänzt.

| | |
|---|---|
| Polymerisationszeit: | 4 Stunden |
| Ausbeute: | 13,6 kg |
| Schüttdichte: | 275 g/dm$^3$ |
| Viskositätszahl: | 40 cm$^3$/g |
| $M_w/M_n$: | 6 |
| Schmelzpunkt (DSC): | 129-131 °C |

**Beispiel 4**

Wie Beispiel 3, jedoch nur kontinuierliche Einschleusung eines Gasgemisches mit 5 % Wasserstoff.

| | |
|---|---|
| Ausbeute: | 19 kg |
| KA: | 19 kg/mmol Zr |
| Schüttdichte: | 175 g/dm$^3$ |
| Viskositätszahl: | 31 cm$^3$/g |
| $M_w/M_n$: | 3,1 |
| Schmelzpunkt (DSC): | 129-131 °C |

**Beispiel 5**

Analog Beispiel 4, jedoch nur 1,5 mmol Zr.

| | |
|---|---|
| Ausbeute: | 16,5 kg |
| KA: | 11,6 kg/mmol Zr |
| Schüttdichte: | 253 g/dm$^3$ |
| Viskosistätszahl: | 35 cm$^3$/g |
| $M_w/M_n$: | 6,2 |
| Schmelzpunkt (DSC): | 129-131 °C |

**Beispiel 6**

Wie Beispiel 4, jedoch nur 0,345 mol Methylaluminoxan (aus Al-Sulfat-Verfahren) und 10 % $H_2$.

| | |
|---|---|
| Ausbeute: | 16,5 kg |
| KA: | 17,8 kg/mmol Zr |
| Schüttdichte: | 285 g/dm$^3$ |
| Viskositätszahl: | 27 cm$^3$/g |
| $M_w/M_n$: | 2,8. |
| Schmelzpunkt (DSC): | 129-131 °C. |

**Beispiel 7**

Wie Beispiel 6, jedoch unter Zusatz von 1600 cm$^3$ Buten.

| | |
|---|---|
| Ausbeute: | 15,9 kg |
| Schüttdichte: | 312 $g/dm^3$ |
| Viskositätszahl: | 19 $cm^3/g$ |
| $M_w/M_n$: | 2,8 |
| Schmelzpunkt: | 124-125 °C. |

## Ansprüche

1. Polyethylenwachs, bestehend aus oder enthaltend Einheiten, welche sich vom Ethylen ableiten, mit einer Molmasse von ca. 2000 bis ca. 10000, einer Molmassenverteilung $M_w/M_n$ von ca. 2 bis 10, einer Viskositätszahl von 20 bis 60 $cm^3/g$, einem Schmelzbereich von ca. 129 bis 131 °C für ein Homopolymerisat und ca. 120 bis 126 °C für ein Copolymerisat und einer Dichte von 0,93 bis 0,97 $g/cm^3$ und einer Schüttdichte von 200 bis 400 $g/dm^3$.

2. Verfahren zur Herstellung eines Polyethylenwachses gemäß Anspruch 1, durch Polymerisation von Ethylen oder Copolymerisation von Ethylen mit einem 1-Olefin der Formel $R\text{-}CH=CH_2$, in der R einen geradkettigen oder verzweigten Alkylrest mit 1 bis 12 C-Atomen bedeutet, bei einer Temperatur von 20 bis 100 °C, einem Druck von 0,5 bis 64 bar, in Lösung, in Suspension oder in der Gasphase, in Gegenwart eines Katalysators, welcher aus einem Metallocen als Übergangsmetallkomponente und einen Aluminoxan als Aktivator besteht, dadurch gekennzeichnet, daß die Polymerisation in Gegenwart eines Katalysators durchgeführt wird, dessen Übergangsmetallkomponente ein unsubstituierter oder substituierter Cyclopentadienylkomplex des Titans, Zirkons oder Hafniums ist, daß das Aluminoxan ein solches der Formel I

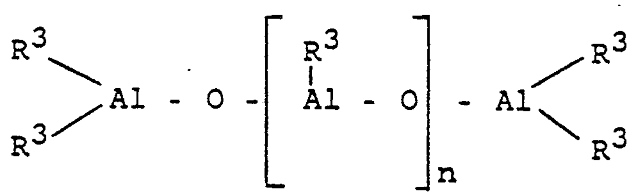

(I)

für den linearen Typ und/oder der Formel II

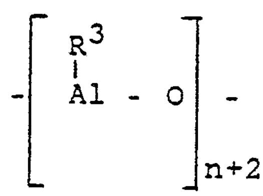

(II)

für den cyclischen Typ ist, wobei in den Formeln I und II $R^3$ eine $C_1$-$C_6$-Alkylgruppe bedeutet und n eine ganze Zahl von 2 bis 40 ist, und daß Wasserstoff in einer Menge von 1 bis 20 Vol.-%, bezogen auf Ethylen, zugegen ist.

3. Verfahren nach Anspruch 2, dadurch gekennzeichnet, daß die Übergangsmetallkomponente Bis(cyclopentadienyl)zirkoniumdimethyl oder Bis(cyclopentadienyl)zirkoniumdichlorid ist.

Patentansprüche für folgenden Vertragsstaat: ES

Verfahren zur Herstellung eines Polyethylenwachses, bestehend aus oder enthaltend Einheiten, welche sich vom Ethylen ableiten, mit einer Molmasse von ca. 2000 bis ca. 10000, einer Molmassenverteilung $M_w/M_n$ von ca. 2 bis 10, einer Viskositätszahl von 20 bis 60 $cm^3/g$, einem Schmelzbereich von ca. 129 bis 131 °C für ein Homopolymerisat und ca. 120 bis 126 °C für ein Copolymerisat und einer Dichte von 0,93 bis 0,97 $g/cm^3$ und einer Schüttdichte von 200 bis 400 $g/dm^3$, durch Polymerisation von Ethylen oder

Copolymerisation von Ethylen mit einem 1-Olefin der Formel R-CH = $CH_2$, in der R einen geradkettigen oder verzweigten Alkylrest mit 1 bis 12 C-Atomen bedeutet, bei einer Temperatur von 20 bis 100 °C, einem Druck von 0,5 bis 64 bar, in Lösung, in Suspension oder in der Gasphase, in Gegenwart eines Katalysators, welcher aus einem Metallocen als Übergangsmetallkomponente und einen Aluminoxan als Aktivator besteht, dadurch gekennzeichnet, daß die Polymerisation in Gegenwart eines Katalysators durchgeführt wird, dessen Übergangsmetallkomponente ein unsubstituierter oder substituierter Cyclopentadienylkomplex des Titans, Zirkons oder Hafniums ist, daß das Aluminoxan ein solches der Formel I

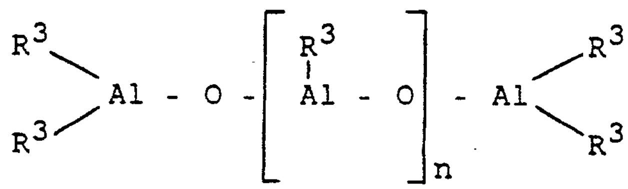

(I)

für den linearen Typ und/oder der Formel II

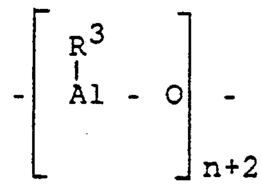

(II)

für den cyclischen Typ ist, wobei in den Formeln und II $R^3$ eine $C_1$-$C_6$-Alkylgruppe bedeutet und n eine ganze Zahl von 2 bis 40 ist, und daß Wasserstoff in einer Menge von 1 bis 20 Vol.-%, bezogen auf Ethylen, zugegen ist.

2. Verfahren nach Anspruch 1, dadurch gekennzeichnet, daß die Übergangsmetallkomponente Bis-(cyclopentadienyl)-zirkoniumdimethyl oder Bis(cyclopentadienyl)-zirkoniumdichlorid ist.

Europäisches Patentamt

# EUROPÄISCHER RECHERCHENBERICHT

Nummer der Anmeldung

EP 88 12 0950

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | PATENT ABSTRACTS OF JAPAN, Band 11, Nr. 85 (C-440)[2532], 14. März 1987; & JP-A-61 236 804 (MITSUI PETROCHEM IND., LTD) 22-10-1986<br>* Insgesamt *<br>--- | 1-3 | C 08 F 10/02<br>C 08 F 4/64 |
| D,A | EP-A-0 021 700 (MITSUI PETROCHEM)<br>* Ansprüche *<br>----- | 1 | |

RECHERCHIERTE SACHGEBIETE (Int. Cl.4)

C 08 F

Der vorliegende Recherchenbericht wurde für alle Patentansprüche erstellt

| Recherchenort | Abschlußdatum der Recherche | Prüfer |
|---|---|---|
| DEN HAAG | 28-02-1989 | DE ROECK R.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)